(19) **Europäisches Patentamt / European Patent Office / Office européen des brevets**

(11) **EP 2 540 495 A1**

(12) # EUROPEAN PATENT APPLICATION
published in accordance with Art. 153(4) EPC

(43) Date of publication:
**02.01.2013 Bulletin 2013/01**

(21) Application number: **11747549.1**

(22) Date of filing: **22.02.2011**

(51) Int Cl.:
***B32B 27/00*** (2006.01)     ***B32B 27/30*** (2006.01)

(86) International application number:
**PCT/JP2011/054423**

(87) International publication number:
**WO 2011/105594 (01.09.2011 Gazette 2011/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2010   JP 2010279113
16.07.2010   JP 2010161573
31.03.2010   JP 2010081935
26.02.2010   JP 2010042305**

(71) Applicant: **Teijin Dupont Films Japan Limited
Chiyoda-ku
Tokyo 100-0013 (JP)**

(72) Inventors:
• **ASAI Masato**
  **Anpachi-gun**
  **Gifu 503-0123 (JP)**
• **MORIMOTO Yukio**
  **Anpachi-gun**
  **Gifu 503-0123 (JP)**

(74) Representative: **Cockerton, Bruce Roger
Carpmaels & Ransford
One Southampton Row
GB-London WC1B 5HA (GB)**

(54) **HARD COAT FILM AND PROCESS FOR PRODUCING SAME**

(57)     The present invention relates to a hard coat film having a hard coat layer on at least one side of a base film, wherein the surface of the hard coat layer has a water contact angle of 78 to 90° and an n-dodecane contact angle of 22°or less.

The hard coat film has excellent fingerprint resist-ance when it is used in a finger input touch panel; has excellent adhesion and no defects which disturb optical inspection when it is used as a protective film for a capacitance touch panel; and preferably has high uniformity in film thickness.

EP 2 540 495 A1

**Description**

TECHNICAL FIELD

The present invention relates to a hard coat film and a production method therefor. More specifically, it relates to a hard coat film which can be advantageously used as a hard coat layer to be formed on the surface of a touch panel and a production method therefor.

BACKGROUND ART

In recent years, a touch panel has been often used as a man/machine interface. The touch panel makes it possible for a user to carry out input operation while looking at a screen by directly mounting a transparent or translucent input device on a display such as a liquid crystal display. Since anyone can easily operate the touch panel as it is easy to input information as well as characters and graphics, the touch panel is used for various purposes. The touch panel is used in a wide variety of fields such as ATM terminals, car navigation systems, smart phones, portable music reproduction terminals and game machines.

The operation principles of the touch panel include optical, ultrasonic, electromagnetic induction, capacitance and resistive systems. Out of these, the resistive system is often used in medium- to small-sized touch panels. Since the capacitance touch panel is excellent in transparency due to a small number of films in use, does not deteriorate by abrasion due to no contact between conductive films and enables detection at a plurality of points, it is widely used nowadays.

To input data into the touch panel, data are input with a human finger or a plastic stylus pen according to each of the above application purposes.

Although the structure of the touch panel differs according to the adopted system and the input method, a hard coat film is formed on at least one side of the touch panel in many cases. As this hard coat film is generally used a laminated film comprising a layer made of a material having high hardness on a plastic film. The hard coat film is formed only on the outer surface side on which a user carries out input operation, that is, a side opposite to the display side, or both sides of the touch panel.

Various properties are required for the hard coat film used in the touch panel, and it is desired that the hard coat film should meet a large number of requirements at the same time.

First of all, the hard coat film to be formed on the surface of the touch panel must be highly uniform in thickness. In the case of a film to be formed on the outer surface side of the touch panel, as light emitted from the display is viewed by a user through the film, the film thickness must be highly uniform to such an extent that the user does not recognize an interference fringe. Meanwhile, in the case of a film to be formed on the display side, the film thickness must be highly uniform to such an extent that the high transparency of the touch panel is not reduced and optical inspection is not disturbed during the production process of the touch panel.

In the case of the "finger input" system that data is input with a human finger, a fingerprint adhered to the surface of the hard coat film becomes a problem.

The finger input touch panel is often used in the field of car navigation systems which do not require high picture quality. The requirement for high picture quality is not so high in this field, and an antiglared hard coat film (AGHC) is used to prevent the reflection and projection of extraneous light in most cases (JP-A 2007-58162 and JP-A 2008-96781). Since this AGHC looks whitish originally, a fingerprint is hardly seen and therefore, much attention has not been paid to a fingerprint problem.

However, as use of the finger input touch panel is spreading to ATM terminals, smart phones, portable music reproduction terminals and game machines, high picture quality characteristics such as a low haze and a clear sensation are now in question and fingerprint resistance is becoming important. The term "fingerprint resistance" as used herein means that a fingerprint is hardly adhered and that the adhered fingerprint can be easily wiped off at the same time.

To improve the fingerprint resistance of the hard coat film, there is proposed a technology for containing a surfactant in a hard coat layer. For example, it is explained in JP-A 2004-114355, JP-A 2005-186584 and JP-A 2009-40056 that a nonionic surfactant, a polymerizable surfactant or a nonionic surfactant having a specific structure and an HLB value of 2 to 15 is contained in the hard coat layer to adjust wettability, respectively, thereby improving fingerprint resistance. However, according to these technologies, the lipophilic nature of the hard coat layer becomes too low with the result that fingerprint wipe-off properties are still unsatisfactory and the durability of fingerprint wipe-off properties is not satisfactory. Therefore, when the fingerprint is wiped off repeatedly, it is gradually becoming difficult to wipe off the fingerprint. Further, when the hard coat layer contains a surfactant, adhesion between the hard coat layer and the base film or the adhesive layer becomes unsatisfactory.

As an alternative method for improving the fingerprint resistance, JP-A 2004-230562 proposes a technology for treating the surface of the hard coat film with an alkaline aqueous solution. According to this technology, there arises the same problems as that when the above surfactants are used, and the number of production steps increases, thereby causing a cost problem.

For application in a touch panel which requires high picture quality, such a good coating appearance that a user cannot recognize interference nonuniformity caused by subtle thickness nonuniformity is required for a surface hard coat layer. To realize this good coating appearance, attempts are being made to improve the leveling of a coating film by using a high-boiling solvent in a coating composition for forming a hard coat layer. However, this high-boiling solvent may remain in the hard coat layer after solidification and a gas may be produced by the gasification of the residual solvent in the subsequent heating step or evacuation step, thereby causing a problem such as a smell or a deposition/ sputtering failure. Therefore, it is desired to improve the problem.

Further, in the case of the above capacitance touch panel, there is a problem specific to its structure and production method. The capacitance touch panel is manufactured by placing on the surface of a display a laminate obtained by forming a plurality of films (for example, PET films) having a patterned ITO layer on a base film in such a manner that the base film comes into contact with the surface of the display. At this point, there arises a problem that the base film which is a PET film in many cases is easily damaged in the transportation step. Since the base film is damaged during the process, it is conceivable to form a protective film having a hard coat layer on the base film.

However, as a known hard coat material has poor adhesion, there may occur a problem with bonding to the films having an ITO layer and/or the surface of the display.

The capacitance touch panel is characterized by extremely high transparency. Therefore, in order to make use of this feature, the further suppression of repelling defects or pinhole-like defects is desired for the hard coat layer in the hard coat film used in the touch panel.

Further, when a protective film is formed on the capacitance touch panel, optical inspection which is conducted several times during the production of the touch panel is carried out while the protective film is formed on the touch panel. Therefore, when a repelling defect or a pinhole-like defect is existent in the hard coat layer, the result of the optical inspection may be disturbed.

The above protective film of the capacitance touch panel remains in the final touch panel product as a hard coat film on the display side.

Finally, the hard coat film is produced as a prolonged film in many cases and rolled to be stored. However, the hard coat layer of the hard coat film has low slipperiness as the smoothness of its surface is generally high, whereby it is often difficult to roll it in many cases. Then, after a protective film having slipperiness is bonded to the hard coat film to prepare a laminate, the laminate is rolled. However, the inventors of the present invention found that when a known material is used as this protective film and the obtained laminate is rolled, depressed defects and/or projecting defects may be produced in the hard coat film while it is stored for a long time. When the hard coat film having the above defects is formed on the outer surface side of the touch panel, visibility is greatly impaired disadvantageously. Therefore, it is necessary to improve this.

The above protective film of the roll is removed at the time of manufacturing the touch panel and does not remain in the final touch panel product.

DISCLOSURE OF THE INVENTION

It is an object of the present invention which was made in view of the above situation to provide a hard coat film which has excellent fingerprint resistance when it is touched by a finger as in a finger input touch panel and preferably has a good coating appearance and a low content of the residual solvent; which has excellent adhesion to the surface of a film having an ITO layer constituting a touch panel and/or a display when it is used as a protective film for a capacitance touch panel, preferably does not reduce the high transparency of a touch panel, preferably has as small a number as possible of defects reducing visibility and does not have any defects disturbing optical inspection; and which preferably has high uniformity in film thickness.

It is another object of the present invention to provide a hard coat film with a protective film which is free from depressed defects and projecting defects even after it is stored for a long time when it is rolled.

Other objects and advantages of the present invention will become apparent from the following description.

According to the present invention, firstly, the above objects and advantages of the present invention are attained by a hard coat film having a hard coat layer on at least one side of a base film, wherein the surface of the above hard coat layer has a water contact angle of 78 to 90° and an n-dodecane contact angle of 22° or less.

Secondly, the above objects and advantages of the present invention are attained by a laminate having a protective film on at least one side of the above hard coat film, wherein the protective film has an adhesive layer on one side of a base film, and the Vickers hardness of a fish-eye on the adhesive layer side of the protective film is 0.70 or less.

BEST MODE FOR CARRYING OUT THE INVENTION

The present invention will be described in detail hereinunder.

The hard coat film of the present invention has a hard coat layer on at least one side of a base film.

The hard coat film of the present invention may further have an adhesive layer between the base film and the hard coat layer.

<base film>

The base film in the hard coat film of the present invention is not particularly limited and a film made of a known material can be advantageously used. Examples of the base film in the present invention include sheets and films made of polyethylene terephthalate, polyethylene naphthalate, polycarbonate, polyethylene, polystyrene triacetyl cellulose and acrylics. Out of these, polyethylene terephthalate and polyethylene naphthalate films may be preferably used because they have good balance among optical properties (such as transparency), mechanical properties, heat resistance and price.

The thickness of the base film is not particularly limited but preferably 25 to 300 $\mu$m, more preferably 50 to 220 $\mu$m, particularly preferably 75 to 195 $\mu$m because the base film has stiffness suitable for use in touch panels and is easy to handle. When the hard coat film of the present invention is used in a finger input touch panel, the thickness of the base film in the hard coat film is preferably set to the above numerical range.

When the hard coat film of the present invention is used in a capacitance touch panel, the thickness of the base film in the hard coat film is preferably 12 to 60 $\mu$m. By setting the thickness of the base film to the above numerical range, a film having a high light transmittance and a low haze can be obtained and the total thickness of a touch panel as a product can be reduced while sufficiently high stiffness is maintained. From this point of view, the thickness of the base film is more preferably 20 to 55 $\mu$m when it is used in a capacitance touch panel.

From this point of view, in the case of a hard coat layer according to a first preferred embodiment of the present invention which will be described hereinafter, the thickness of the base film is preferably 25 to 300 $\mu$m, more preferably 50 to 220 $\mu$m, particularly preferably 75 to 195 $\mu$m. In the case of a hard coat layer according to a second preferred embodiment of the present invention which will be described hereinafter, the thickness of the base film is preferably 12 to 60 $\mu$m, more preferably 20 to 55 $\mu$m.

<hard coat layer>

The surface of the hard coat layer in the hard coat film of the present invention has a water contact angle of 78 to 90° and an n-dodecane contact angle of 22° or less. When the water and n-dodecane contact angles of the surface of the hard coat layer are set to the above ranges, fingerprint resistance becomes high and scratch resistance and adhesion become excellent at the same time. Scratch resistance and adhesion are properties to which special importance is attached when the hard coat film of the present invention is used in a capacitance touch panel.

The above expression "an n-dodecane contact angle of 22° or less" means that n-dodecane droplets spread in the measurement of the contact angle of the surface of the hard coat layer and therefore the n-dodecane contact angle is so low that the accurate measurement of the contact angle is impossible. In the present invention, a hard coat layer which meets the other requirements specified in the present invention and has such a low n-dodecane contact angle can provide the desired effect of the present invention.

[first preferred embodiment]

In the first preferred embodiment of the present invention, the surface of the hard coat layer has a water contact angle of 80 to 88° and an n-dodecane contact angle of 22° or less.

When the wettability of the surface of the hard coat layer is set to the above numerical ranges, fingerprint resistance becomes high. That is, by making the surface of the hard coat layer lipophilic to such an extent that the n-dodecane contact angle becomes 22° or less, when a fingerprint is adhered to the surface, oil contained in the fingerprint easily spreads, thereby making it possible to prevent the fingerprint from standing out white which arises from a diffusion of the light by the oil contained in the fingerprint with the result that it can be made more indistinctive. At the same time, by setting the hydrophilic nature of the surface of the hard coat layer to a water contact angle of 80 to 88°, the adhered fingerprint can be easily wiped off. When the water contact angle is smaller than 80°, both water and oil spread easily and the adhered fingerprint may be hardly wiped off. When the surface of the hard coat layer is made hydrophobic to such an extent that the water contact angle is larger than 88°, water hardly goes under oil on the surface of the hard coat layer, whereby the fingerprint is hardly wiped off. Water includes water contained in the adhered fingerprint, washing water used for wiping off and water contained in aspirated air.

From this point of view, in the first preferred embodiment, it is more preferred that the water contact angle be 82 to 87° and the n-dodecane contact angle be 22° or less, and it is particularly preferred that the water contact angle be 83 to 86° and the n-dodecane contact angle be 22° or less.

The hard coat film of the present invention having such fingerprint resistance can be preferably used in a display screen such as liquid crystal display elements, the surface of a housing for electronic equipment or a finger input touch panel, particularly preferably used as a hard coat film for finger input touch panels.

[second preferred embodiment]

In the second preferred embodiment of the present invention, the surface of the hard coat layer has a water contact angle of 78 to 86° and an n-dodecane contact angle of 22° or less.

By setting the wettability of the surface of the hard coat layer to the above numerical ranges, the surface of the hard coat film becomes more excellent in adhesion and scratch resistance when the surface of the above hard coat layer is bonded to a display screen such as liquid crystal display elements or another film material by an adhesive.

When the water contact angle of the surface of the hard coat layer is smaller than 78°, it may be difficult to obtain a hard coat film having excellent scratch resistance. At the same time, the lipophilic nature of the hard coat layer greatly degrades and the effect of improving adhesion to an adhesive may become weak according to the type of the adhesive in use. When the water contact angle is larger than 86°, the wettability of the hard coat layer by a polar solvent significantly lowers, whereby it may be difficult for a user (for example, a touch panel manufacturer) to carry out bonding operation and adhesion to an adhesive layer having a hydrophilic group may become unsatisfactory. When the n-dodecane contact angle is larger than 22°, the lipophilic nature of the surface of the hard coat layer becomes unsatisfactory and adhesion to the adhesive may become considerably insufficient.

From this point of view, in the first preferred embodiment, it is more preferred that the water contact angle be 80 to 85° and the n-dodecane contact angle be 22° or less, and it is particularly preferred that the water contact angle be 82 to 85° and the n-dodecane contact angle be 22° or less.

A hard coat film having this hard coat layer can be advantageously used in a capacitance touch panel.

[thickness of hard coat layer]

The hard coat layer in the hard coat film of the present invention preferably has a thickness of 1 to 10 $\mu$m. As the hard coat layer becomes thicker, the water contact angle becomes lower whereas as the hard coat layer becomes thinner, the water contact angle becomes higher. To make it easy to control the water contact angle to the range specified by the present invention, the thickness of the hard coat layer is more preferably 1 to 8 $\mu$m, particularly preferably 1 to 6 $\mu$m.

To improve fingerprint resistance more, the thickness of this hard coat layer is preferably 1 to 7 $\mu$m, more preferably 1.5 to 6 $\mu$m.

When the hard coat film of the present invention is used in a capacitance touch panel, the thickness of the hard coat layer is preferably 1 to 3 $\mu$m. When the thickness of the hard coat layer falls within this numerical range, it is easy to control the water contact angle as described above, and the hard coat film hardly curls at the time of heating. From this point of view, the thickness of the hard coat layer when it is used in a capacitance touch panel is more preferably 1 to 2.2 $\mu$m.

From this point of view, in the above first preferred embodiment, the thickness of the hard coat layer is preferably 1 to 7 $\mu$m, more preferably 1.5 to 6 $\mu$m. In the second preferred embodiment, the thickness of the hard coat layer is preferably 1 to 3 $\mu$m, more preferably 1 to 2.2 $\mu$m.

[pencil hardness of hard coat layer]

The pencil hardness of the surface of the hard coat layer of the hard coat film of the present invention is preferably H or more.

[number of defects in hard coat layer]

Preferably, the hard coat film of the present invention has 20 or less defects with a diameter of 30 $\mu$m or more per m$^2$ when the surface of the hard coat layer is observed through an optical microscope. The term "defects" means repelling defects or pinhole-like defects produced by "a failure of coating" in the hard coat layer due to the repelling of a coating solution in the step of applying the coating solution for forming the hard coat layer. The failure of coating includes a case where the thickness of the hard coat layer becomes extremely small though the hard coat layer is not completely missing.

These defects can be seen as defects having apparently different contrasts from those of the surrounding parts when observed through an optical microscope.

The diameter of each defect is the maximum length in the film in-plane direction of the defect. When the number of defects having the above specific diameter falls within the above numerical range and the hard coat film is used in a touch panel, the defects are substantially invisible and preferred quality is obtained as a capacitance touch panel having a high quality requirement for defects. From this point of view, the number of defects is preferably 15 or less, more preferably 10 or less, particularly preferably 5 or less per $m^2$.

A method in which a specific vehicle is used as the solvent contained in a coating solution for forming the hard coat layer may be employed to set the above number of defects to the above range.

[material of hard coat layer]

Preferably, the hard coat layer in the hard coat film of the present invention is mainly composed of a cured product of a radiation curable resin which will be described hereinafter. The expression "mainly" means that the content of the cured product of the above radiation curable resin in the hard coat layer is 80 mass% or more, preferably 90 mass% or more based on the total mass of the hard coat layer.

When the hard coat layer is mainly composed of this material, the hard coat layer in the hard coat film of the present invention can easily have the above preferred properties.

<adhesive layer>

The hard coat film of the present invention may further have an adhesive layer between the above base film and the hard coat layer.

The above adhesive layer is preferably formed from a composition containing a polyester resin and a crosslinking agent (adhesive layer forming coating solution). This adhesive layer forming coating solution may optionally contain other components.

In this adhesive layer, the components contained in the adhesive layer forming coating solution may exist as they are, as a product produced by a reaction among them (for example, a curing reaction), or a mixture thereof.

A description is subsequently given of each of the components of the adhesive layer. In the following description, all the components when contained in the adhesive layer forming coating solution are explained, and it can be easily understood by people having ordinary skill in the art that the above state of each component contained in the adhesive layer forming coating solution is not always the same as the state of the component existent in the adhesive layer.

The contents of the above components are the calculated values of the components excluding the solvent in the adhesive layer forming composition.

[polyester resin]

The above polyester resin is a polyester resin obtained from a dicarboxylic acid and a diol.

Examples of the above dicarboxylic acid include terephthalic acid, isophthalic acid, phthalic acid, phthalic anhydride, 2,6-naphthalenedicarboxylic acid, 1, 4-cyclohexanedicarboxylic acid, adipic acid, sebacic acid, trimellitic acid, pyromellitic acid, dimeric acid and 5-sodium sulfoisophthalic acid.

Examples of the diol include ethylene glycol, 1,4-butanediol, diethylene glycol, dipropylene glycol, 1,6-hexanediol, 1,4-cyclohexane dimethanol, xylene glycol, dimethylolpropane, poly(ethylene oxide)glycol and poly(tetramethylene oxide)glycol.

The polyester resin in the adhesive layer is preferably a copolyester obtained by using two or more dicarboxylic acids and/or two or more diols as it has more excellent adhesion. The polyester resin may contain an unsaturated polybasic acid component such as maleic acid or itaconic acid, or a hydroxycarboxylic acid component such as p-hydroxybenzoic acid if its amount is small.

The glass transition point temperature (Tg) of the polyester resin is preferably 40 to 100°C. When Tg falls within this range, excellent adhesion and scratch resistance can be obtained. Further, the contact angles of the surface of the hard coat layer can be easily controlled to the ranges specified by the present invention. When Tg is lower than 40°C, anti-block properties tend to deteriorate and when Tg is higher than 100°C, the adhesive layer becomes hard and fragile and scratch resistance may degrade. From this point of view, Tg is more preferably 60 to 80°C.

The intrinsic viscosity (IV) of the polyester resin is preferably 0.4 or more to less than 0.7. When IV falls within this range, the production of a low-molecular weight product from the polyester resin itself can be suppressed without fail and the cohesion force of the polyester resin becomes higher, thereby making it possible to obtain higher adhesion and scratch resistance. Further, the contact angles of the surface of the hard coat layer can be easily controlled to the ranges specified by the present invention. When IV is lower than 0.4, the production of a low-molecular weight product from the polyester resin itself readily occurs and the transparency of the base material is apt to lower. From this point of view, IV of the polyester resin is more preferably 0.5 or more to less than 0.7.

Although the polyester resin is preferably soluble or dispersible in water, a polyester resin which is soluble in water containing a small amount of an organic solvent may also be used.

This polyester resin can be manufactured by the following method, for example.

A dicarboxylic acid and a diol are fed to an transesterification reactor, a suitable catalyst is added, and a transesterification reaction is carried out by controlling the temperature to 230°C in a nitrogen atmosphere while the formed methanol is distilled off. Then, the temperature is gradually raised to 255°C, and the inside pressure of the system is reduced to carry out a polycondensation reaction so as to obtain the polyester resin.

When the molecular weight rises at the time of polycondensation, the melt viscosity becomes high, thereby making it difficult to stir the inside of the system. The preferred polyester resin used in the adhesive layer has high melt viscosity though its molecular weight is low as compared with homopolyethylene terephthalate, whereby it is extremely difficult to stir the inside of the system. Therefore, a polyethylene resin having high intrinsic viscosity can be manufactured by raising the torque of the motor of agitation equipment, elaborating the shape of a blade, or extending the polymerization time.

The content of the polyester resin in the adhesive layer is preferably 50 to 95 mass%, more preferably 60 to 90 mass% based on the total mass of the adhesive layer. Within this range, an adhesive layer having more excellent adhesion is obtained, and the wettability of the surface of the hard coat layer can be easily controlled to the ranges specified by the present invention.

[crosslinking agent]

When the adhesive layer contains a crosslinking agent, the anti-block properties of the adhesive layer can be improved. Further, the strength (cohesion force) of the adhesive layer can be increased so that an adhesive layer having excellent adhesion can be obtained. Further, the contact angles of the surface of the hard coat layer are easily controlled to the ranges specified by the present invention. The anti-block properties of the above adhesive layer means that blocking between the adhesive layer formed on only one side and the base film, blocking between the adhesive layers formed on both sides, or blocking between each of the adhesive layers formed on both sides and the hard coat layer formed on one side hardly occurs.

The crosslinking agent in the adhesive layer is preferably selected from an epoxy-based crosslinking agent, an oxazoline-based crosslinking agent, a melamine-based crosslinking agent and an isocyanate-based crosslinking agent.

Examples of the above epoxy-based crosslinking agent include polyepoxy compounds, diepoxy compounds, monoepoxy compounds and glycidylamine compounds. The polyepoxy compounds include sorbitol, polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether; the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether; and the monoepoxy compounds include allyl glycidyl ether, 2-ethylhexyl glycidyl ether and phenyl glycidyl ether.

The above glycidylamine compounds include N,N,N',N'-tetraglycidyl-m-xylylenediamine and 1,3-bis(N,N-diglycidylamino)cyclohexane.

The above oxazoline-based crosslinking agent is preferably a polymer having an oxazoline group. The polymer can be manufactured by the homopolymerization of a monomer containing an addition polymerizable oxazoline group or the copolymerization of the above monomer and another monomer.

Examples of the monomer containing an addition polymerizable oxazoline group include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. They may be used alone or in combination of two or more. Out of these, 2-isopropenyl-2-oxazoline is preferred as it is industrially easily acquired.

The other monomer is not particularly limited if it is a monomer copolymerizable with the above monomer containing an addition polymerizable oxazoline group. Examples thereof include (meth)acrylic acid esters such as alkyl acrylates and alkyl methacrylates (examples of the alkyl group include methyl group, ethyl group, n-propyl group, isopropyl group, n-butyl group, isobutyl group, t-butyl group, 2-ethylhexyl group and cyclohexyl group); unsaturated carboxylic acids such as acrylic acid, methacrylic acid, itaconic acid, maleic acid, fumaric acid, crotonic acid, styrenesulfonic acid and salts (sodium salts, potassium salts, ammonium salts and tertiary amine salts) thereof; unsaturated nitrile compounds such as acrylonitrile and methacrylonitrile; unsaturated amide compounds such as acrylamide, methacrylamide, N-alkyl acrylamides, N-alkyl methacrylamides, N,N-dialkyl acrylamides and N,N-dialkyl methacrylates (examples of the alkyl group include methyl group, ethyl group, n-propyl group, isopropyl group, n-butyl group, isobutyl group, t-butyl group, 2-ethylhexyl group and cyclohexyl group); vinyl ester compounds obtained by adding a polyalkylene oxide to an ester moiety such as vinyl acetate, vinyl propionate, acrylic acid and methacrylic acid; vinyl ether compounds such as methyl vinyl ether and ethyl vinyl ether; $\alpha$-olefins such as ethylene and propylene; halogen-containing $\alpha,\beta$-unsaturated monomers such as vinyl chloride, vinylidene chloride and vinyl fluoride; and $\alpha,\beta$-unsaturated aromatic monomers such as styrene and $\alpha$-methylstyrene. They may be used alone or in combination of two or more.

Preferred examples of the above melamine-based crosslinking agent include etherified compounds and mixtures thereof obtained by reacting a methylolmelamine derivative obtained by condensing melamine and formaldehyde with a lower alcohol such as methyl alcohol, ethyl alcohol or isopropyl alcohol. Examples of the methylolmelamine derivative include monomethylolmelamine, dimethylolmelamine, trimethylolmelamine, tetramethylolmelamine, pentamethylolmelamine and hexamethylolmelamine.

Examples of the above isocyanate-based crosslinking agent include tolylene diisocyanate, diphenylmethane-4,4'-diisocyanate, methaxylylene diisocyanate, hexamethylene-1,6-diisocyanate, 1,6-diisocyanate hexane, adduct of tolylene diisocyanate with a hexanetriol, adduct of tolylene diisocyanate with trimethylolpropane, polyol modified diphenylmethane-4,4'-diisocyanate, carbodiimide modified diphenyl methane-4,4'-diisocyanate, isophorone diisocyanate, 1,5-naphthalene diisocyanate, 3,3'-bitolylene-4,4'-diisocyanate, 3,3'-dimethyl diphenylmethane-4,4'-diisocyanate and metaphenylene diisocyanate.

Out of these, oxazoline-based crosslinking agents are particularly preferred. The oxazoline-based crosslinking agents are easy to handle and can provide an adhesive layer forming coating solution having a long pot life.

The crosslinking agents may be used alone or in combination of two or more.

The content of the crosslinking agent in the adhesive layer is preferably 0.1 to 35 mass%, more preferably 10 to 30 mass% based on the total mass of the adhesive layer. When the content of the crosslinking agent is lower than 0.1 mass%, the cohesion force of the adhesive layer may not be obtained, whereby adhesion may become unsatisfactory disadvantageously. When the content is higher than 35 mass%, the adhesive layer becomes very hard and stress relaxation becomes little, whereby adhesion may not be obtained, or foreign matter may be easily produced from a crosslinked product when a film having the adhesive layer is recycled.

[other components]

The adhesive layer may optionally contain other components excluding the above polyester resin and the crosslinking agent.

The other components include fine particles, an aliphatic wax, a resin other than the polyester resin, an antistatic agent, a colorant and an ultraviolet absorbent.

When the adhesive layer contains the other components, the other components may be contained as they are or a reaction product thereof.

- fine particles -

Examples of the above fine particles include inorganic fine particles such as calcium carbonate, magnesium carbonate, calcium oxide, zinc oxide, magnesium oxide, silicon oxide, silicate soda, aluminum hydroxide, iron oxide, zirconium oxide, barium sulfate, titanium oxide, tin oxide, antimony trioxide, carbon black and molybdenum disulfide; and organic fine particle such as acrylic crosslinked polymers, styrene-based crosslinked polymers, silicone resin, fluororesin, benzoguanamine resin, phenol resin and nylon resin. They may be used alone or in combination of two or more.

The fine particles have an average particle diameter of preferably 22 to 220 nm, more preferably 40 to 122 nm. When the average particle diameter is larger than 220 nm, the fine particles readily fall off from the adhesive layer and when the average particle diameter is smaller than 22 nm, sufficiently high slipperiness and scratch resistance may not be obtained disadvantageously.

The content of the fine particles is preferably 0.1 to 10 mass% based on the total mass of the adhesive layer. When the content is lower than 0.1 mass%, sufficiently high slipperiness and scratch resistance may not be obtained. When the content is higher than 10 mass%, the cohesion force of the coating film drops, whereby adhesion may become unsatisfactory and it may be difficult to control the contact angles of the surface of the hard coat layer to the ranges specified in the present invention.

- aliphatic wax -

Examples of the above aliphatic wax include plant-based waxes such as carnauba wax, candelilla wax, rice bran wax, wood wax, jojoba wax, palm wax, rhodine modified wax, auricurry wax, sugar cane wax, espalt wax and bark wax; animal-based waxes such as beeswax, lanolin, whale wax, insects wax and shellac wax; mineral-based waxes such as montan wax, ozokerite and ceresin wax; petroleum-based waxes such as paraffin wax, microcrystalline wax and petrolactam; and synthetic hydrocarbon-based waxes such as Fisher-Tropsch wax, polyethylene wax, oxidized polyethylene wax, polypropylene wax and oxidized polypropylene wax. Out of these, carnauba wax, paraffin wax and polyethylene wax are particularly preferred because they are excellent in adhesion to the hard coat layer and the base film and slipperiness. They are preferably used as a water dispersion because it can reduce an environmental burden and is easy to handle.

The content of the aliphatic wax is preferably 0.5 to 30 mass%, more preferably 1 to 10 mass% based on the total mass of the adhesive layer. When this content is lower than 0.5 mass%, the slipperiness of the surface of the film may not be fully obtained disadvantageously. When the content is higher than 30 mass%, adhesion to the base film and the hard coat layer may become unsatisfactory.

[thickness of adhesive layer]

The thickness of the adhesive layer is preferably 0.01 to 0. 3 $\mu$m, more preferably 0. 02 to 0. 25 $\mu$m. When the adhesive layer is too thin, it may deteriorate in adhesion and when it is too thick, it may cause blocking or increase the haze value.

<production process of hard coat film>

The hard coat film having the above layers can be manufactured through the steps of applying a composition containing at least a radiation curable resin and an organic solvent (hard coat layer forming coating solution) to at least one side of the base film to form a coating film and exposing the coating film to radiation. Therefore, the hard coat layer in the hard coat film of the present invention is preferably a layer composed of a cured product of the radiation curable resin.

When the hard coat film of the present invention has the adhesive layer between the base film and the hard coat layer, the adhesive layer can be formed by applying an adhesive layer forming coating solution to a surface on which the hard coat layer is to be formed out of the surfaces of the base film to form a coating film, heating the coating film to form the adhesive layer, applying a hard coat layer forming coating solution to the adhesive layer to form a coating film, and exposing the coating film to radiation.

A description is subsequently given of the method of manufacturing a base film having an adhesive layer and the method of forming a hard coat layer when the hard coat film of the present invention has an optional adhesive layer.

<method of manufacturing a base film having an adhesive layer>

The adhesive layer in the present invention can be formed by applying the adhesive layer forming coating solution to a surface on which the hard coat layer is to be formed out of the surfaces of the above base film to form a coating film and heating the coating film.

The above adhesive layer forming coating solution contains the above polyester resin and the crosslinking agent, and optionally other components. The coating solution may be a solution, dispersion or emulsion containing these components in a preferred ratio in the adhesive layer and further a suitable solvent. Water is preferably used as the solvent in the adhesive layer forming coating solution.

The solids content (the ratio of the total mass of all the components excluding the solvent in the coating solution to the total mass of the coating solution) of the adhesive layer forming coating solution is preferably 22 mass% or less, particularly preferably 1 to 10 mass%. When the solids content is lower than 1 mass%, the wettability of the base film may become unsatisfactory and when the solids content is higher than 22 mass%, the stability of the coating solution and the appearance of the adhesive layer may deteriorate disadvantageously.

When the adhesive layer forming coating solution is to be applied to the base film, it is preferred that a physical treatment such as corona surface treatment, flame treatment or plasma treatment should be made on the surface of the base film as a pre-treatment for improving the coatability of the coating solution or that a surfactant should be added to the coating solution.

The surfactant has the function of promoting the wettability of the film surface by the coating solution and the function of improving the stability of the coating solution. Examples thereof include anionic surfactants such as polyoxyethylene-fatty acid esters, sorbitan fatty acid esters, glycerin fatty acid esters, fatty acid metal soaps, alkyl sulfates, alkyl sulfonates and alkyl sulfosuccinates; and nonionic surfactants. The amount of the surfactant is preferably 0.01 to 2 mass% based on the total mass of the coating solution.

The adhesive layer forming coating solution may be applied to the surface of the base film during the production of the base film or in an arbitrary stage after production. However, so-called "in-line coating" that the application of the adhesive layer forming coating solution to the base film is carried out during the production of the base film is preferred, and the application of the adhesive layer forming coating solution to the film before the completion of oriented crystallization is more preferred. Examples of the film before the completion of crystalline orientation include an unstretched film, a monoaxially stretched film which is obtained by stretching an unstretched film in a longitudinal or transverse direction, or a biaxially oriented film which has been stretched in both longitudinal and transverse directions at a low draw ratio (a biaxially oriented film before the completion of oriented crystallization by re-stretching in the longitudinal or transverse direction in the end). Preferably, the coating solution is applied to an unstretched film or a monoaxially stretched film, and the film is then stretched in a longitudinal direction and/or a transverse direction and heat set.

Any known coating method may be employed. Examples of the coating method include roll coating, gravure coating, roll brush coating, spray coating, air knife coating, dip coating, curtain coating and a combination thereof.

The coating film may be formed on only one side or both sides of the film.

Since the thickness of the adhesive layer is preferably set to the above range, conditions for applying the coating solution are preferably selected and set to ensure that the thickness of the adhesive layer falls within the above numerical range. Suitable coating conditions can be easily determined through only a few preliminary experiments conducted by a person skilled in the art.

The coating film is formed on the surface of the base film by the above coating. Then, the adhesive layer can be formed on the surface of the base film by heating this coating film.

The heating temperature in this step is preferably 80 to 245°C, more preferably 90 to 240°C. The heating time is preferably 1 second to 3 minutes, more preferably 5 seconds to 2 minutes, much more preferably 10 seconds to 1 minute.

<method of forming a hard coat layer>

The hard coat layer in the hard coat film of the present invention can be manufactured through the steps of applying a hard coat layer forming coating solution to at least one side of the base film and exposing the coating film to radiation.

The above hard coat layer forming coating solution is applied to at least one side of the base film when the hard coat film of the present invention does not have the adhesive layer or to the adhesive layer formed on at least one side of the base film when the hard coat film of the present invention has the adhesive layer.

[hard coat layer forming coating solution]

The above hard coat layer forming coating solution contains at least a radiation curable resin and an organic solvent and preferably a photopolymerization initiator and optionally other components.

- radiation curable resin -

The above wettability of the hard coat layer can be obtained when a copolymer of a polyfunctional (meth) acrylate and a (poly)alkylene glycol is used as the radiation curable resin contained in the hard coat layer forming coating solution and the hard coat layer comprises a cured product of the above copolymer. The contact angles of the surface of the hard coat layer can be adjusted to desired values by suitably selecting the ratio of the polyfunctional (meth)acrylate and the (poly)alkylene glycol.

The inventors found that it is impossible to adjust the water contact angle and the n-dodecane contact angle of the surface of the hard coat layer at the same time simply by adding an independent additive such as a surfactant which is generally used for the control of wettability to the hard coat layer.

The above polyfunctional (meth)acrylate is preferably selected from polyfunctional (meth)acrylate compounds such as polyfunctional (meth)acrylate monomers, polyfunctional (meth)acrylate oligomers and polyfunctional (meth) acrylate polymers all of which can increase crosslinking density after curing, can enhance the effect of improving surface hardness and have high transparency. At least one selected from these can be advantageously used. This polyfunctional (meth)acrylate is a compound having (meth)acryloyl groups in the molecular, preferably at least two (meth)acryloyl groups in the molecule, which makes it easy to promote a crosslinking reaction and makes it possible to increase the surface hardness of the hard coat layer. The polyfunctional (meth)acrylate in the present invention may have another polymerizable functional group except for the (meth) acryloyl group in the molecule.

Examples of the polyfunctional (meth)acrylate compound having at least two (meth)acryloyl groups in the molecule include neopentyl glycol di(meth)acrylate, trimethylolpropane tri (meth) acrylate, pentaerythritol tri (meth) acrylate, trimethylolethane tri(meth)acrylate, pentaerythritol tetra (meth) acrylate, dipentaerythritol tetra(meth)acrylate, alkyl modified dipentaerythritol tetra (meth) acrylate, dipentaerythritol penta (meth) acrylate, alkyl modified dipentaerythritol penta(meth)acrylate, dipentaerythritol hexa (meth) acrylate, caprolactone modified dipentaerythritol hexa (meth) methacrylate, ditrimethylolpropane tetra (meth) acrylate and melamine (meth) acrylate; oligomers which are 2- to 22-mers comprising at least one of them; and polymers comprising at least one of them. The above polyfunctional (meth)acrylates may be used alone or in combination of two or more.

Examples of the above (poly)alkylene glycol include mono (alkylene glycols) such as ethylene glycol and propylene glycol; oligo(alkylene glycol)oligomers which are 2 to 10-mers comprising at least one of them; and poly(alkylene glycols) comprising at least one of them.

The radiation curable resin in the present invention is preferably a radiation curable resin which comprises a (poly)alkylene glycol component-containing (meth)acrylic polymer containing a (poly)alkylene glycol in the main chain or side chain of a (meth) acrylic polymer comprising the above polyfunctional (meth)acrylate. Use of a cured product thereof as the hard coat layer is particularly preferred so as to achieve the water contact angle and the n-dodecane contact angle specified by the present invention.

Particularly preferably, the radiation curable resin is a resin having a (meth) acryloyl group as a functional group at both ends of a (poly) alkylene glycol; or a resin obtained by the random copolymerization or block copolymerization of a (poly) alkylene glycol with a polyfunctional (meth) acrylate oligomer or a polyfunctional (meth)acrylate polymer. Most preferably, the resin has a blocked copolymerized (poly)alkylene glycol component in the main chain or side chain of a polyfunctional (meth)acrylate oligomer or a polyfunctional (meth)acrylate polymer.

The (poly)alkylene glycol component has a number average molecular weight Mn in terms of polystyrene measured by gel permeation chromatography (GPC) of preferably 46 to 1,000,000, more preferably 60 to 500,000. When the number average molecular weight Mn falls within the above numerical range, it is easy to adjust the water contact angle and the n-dodecane contact angle of the surface of the hard coat layer to the above numerical ranges specified by the present invention. When the number average molecular weight Mn is too high, the water contact angle tends to become too high. Further, the viscosity of the coating solution becomes too high, thereby making it difficult to apply the coating solution. Moreover, as the coating solution is apt to be hardly dissolved in a solvent having low polarity, it may be difficult to handle the coating solution.

The copolymerization ratio of the (poly)alkylene glycol component is preferably 1 to 5 mass%, more preferably 1.5 to 4 mass%, particularly preferably 2 to 3 mass% based on the mass of the (meth)acrylic polymer composed of a polyfunctional (meth) acrylate compound. When the ratio of the (poly)alkylene glycol component falls within the above numerical range, it is easy to adjust the water contact angle and the n-dodecane contact angle of the surface of the hard coat layer to the numerical ranges specified by the present invention. When the copolymerization ratio of the (poly) alkylene glycol component is low, the water contact angle becomes large and when the copolymerization ratio of the (poly) alkylene glycol component is increased, the water contact angle becomes small. The n-dodecane contact angle is not so much affected by the copolymerization ratio of the (poly)alkylene glycol component. Therefore, when the (poly) alkylene glycol component copolymerized with the (meth)acrylic polymer is used, a combination of a water contact angle and an n-dodecane contact angle which cannot be obtained simply by adding an ordinary surfactant can be easily realized.

The specific copolymerization ratio for realizing the desired contact angles can be easily known through only a few preliminary experiments conducted by a person skilled in the art.

The number average molecular weight Mn in terms of polystyrene measured by GPC of the above radiation curable resin is preferably 100 to 1,000,000, more preferably 1,000 to 500,000. When the number average molecular weight Mn is too high, viscosity becomes too high, whereby coating may become difficult.

Commercially available products which meet the above requirements may be used as the above radiation curable resin. Commercially available products include KZ6404 (of JSR Corporation), Rucifural G-004 (of Nippon Paint Co., Ltd.) and Beam Set 1460 (of Arakawa Chemical Industries, Ltd.).

- photopolymerization initiator -

The above photopolymerization initiator is a component which is optionally used to improve the hardness of the hard coat layer in the hard coat film of the present invention.

Examples of the photopolymerization initiator in the present invention include 1-hydroxycyclohexylphenyl ketone, 2,2-dimethoxy-2-phenyl acetophenone, xathone, fluorenone, anthraquinone, benzaldehyde, fluorene, anthraquinone, triphenylamine, carbazole, 3-methyl acetophenone, 4-chlorobenzophenone, 2,2-dimethoxy-2-phenyl acetophenone, 2-methyl-1-1[4-(methylthio)phenyl]-2-morpholino-propan-1-one, 2,4,6-trimethylbenzoyl diphenylphosphine oxide and bis(2,6-dimethoxybenzoyl)2,4,4-trimethyl pentylphosphine oxide.

The amount of the photopolymerization initiator in the hard coat layer forming coating solution is preferably 10 mass% or less, more preferably 0.1 to 10 mass% based on 100 mass% of the radiation curable resin. When the amount of the photopolymerization initiator falls within the above numerical range, the effect of improving the surface hardness of the hard coat layer can be enhanced. When the amount of the photopolymerization initiator is too large, the photopolymerization initiator added tends to serve as a plasticizer, whereby the strength of the hard coat layer may become low.

- other additives which may be optionally added -

The hard coat layer forming coating solution may optionally contain other additives besides the above radiation curable resin and the photopolymerization initiator as long as the contact angles of the surface of the hard coat layer fall within the ranges specified by the present invention.

The other additives include inorganic fine particles, organic fine particles, a photosensitizing agent, a leveling agent, a plasticizer, an ultraviolet absorbent, an antioxidant, an antistatic agent, a pigment and a dye.

- hard coat layer forming coating solution -

The hard coat layer forming coating solution in the present invention is a liquid, preferably a solution obtained by adding the above radiation curable resin, the photopolymerization initiator and other additives which may be optionally added to a suitable solvent and mixing them together. For the addition of the above components, the components may be added as solids such as powders, or as a solution or dispersion obtained by adding these solids to a suitable solvent.

The solvent which is used to prepare the hard coat layer forming coating solution is not particularly limited and examples thereof include ketones such as methyl ethyl ketone, methyl isobutyl ketone and cyclohexanone; alcohols such as methanol, ethanol, propanol, n-butanol, secondary butanol and isopropyl alcohol; esters such as butyl acetate and ethyl acetate; aromatic hydrocarbons such as toluene and xylene; and glycol ethers such as propylene glycol monomethyl ether and propylene glycol monomethyl ether acetate. By using any one of the above solvents, the dispersibility of the hard coat layer forming coating solution becomes high and the appearance of the hard coat layer becomes good.

Since the required performance of the hard coat layer is a little different according to the purpose of the hard coat film of the present invention as described above, it is preferred to select and use the most suitable solvent so as to obtain the required performance more effectively.

When the hard coat film of the present invention is used in a touch panel, especially a touch panel which requires high picture quality, such a good coating appearance that a user cannot recognize interference nonuniformity caused by subtle thickness nonuniformity is desired. To achieve such a good coating appearance, attempts are being made to use a high-boiling solvent as the solvent for the hard coat layer forming coating solution so as to improve the leveling of the coating film. However, this high-boiling solvent may remain in the formed hard coat layer disadvantageously.

The inventors found that a hard coat layer having a good coating appearance such as leveling and a low content of the residual solvent can be obtained by using a solvent containing an organic solvent having a boiling point of 120°C or lower and a viscosity of 1.5 to 3. 0 mPa· s (to be referred to as "low-boiling organic solvent" hereinafter) in a certain ratio as the solvent for the hard coat layer forming coating solution. By using the low-boiling organic solvent having a boiling point and a viscosity within the above numerical ranges at the same time, the subtle thickness nonuniformity of the hard coat layer can be suppressed, thereby making it possible to reduce interference nonuniformity. When the boiling point of the solvent is higher than 120°C, the solvent may be hardly removed completely and a significant amount of the organic solvent remains in the hard coat layer in many cases. From this point of view, the boiling point is preferably 100°C or lower, more preferably 95°C or lower, particularly preferably 90°C or lower. The lower limit of the boiling point of the low-boiling organic solvent is not particularly limited but preferably much higher than room temperature, for example, 45°C or higher, more preferably 60°C or higher, particularly preferably 80°C or higher, from the viewpoint of the handling ability of the solvent and the coating solution. When the viscosity falls within the above numerical range, the coating solution flows properly after it is applied and before it is heated so that a high leveling effect can be obtained. This makes it possible to obtain a good coating appearance. When the viscosity is lower than 1.5 mPa· s, the flowability of the coating solution becomes too high, thereby readily producing a coating defect called "flow nonuniformity". When the viscosity is higher than 3.0 mPa· s, the flowability of the coating solution becomes too low, whereby a desired leveling effect tends to be unobtainable and a good coating appearance may not be obtained. From this point of view, the viscosity is preferably 1.8 to 2. 7 mPa· s, more preferably 2.0 to 2.5 mPa · s.

The above low-boiling organic solvent is not limited to a particular kind as long as the above numerical ranges of boiling point and viscosity are obtained, and examples thereof include alcohols such as isopropyl alcohol and t-butanol and glycol ethers such as propylene glycol monomethyl ether. Out of these, alcohols are preferred, and t-butanol is particularly preferred.

To achieve a good balance between the coating appearance and the residual solvent in the hard coat layer, the above low-boiling organic solvent is preferably contained in an amount of 25 to 60 mass% based on the total mass of the hard coat layer forming coating solution. When the above low-boiling organic solvent is contained in the above range, the coating appearance of the hard coat layer can be made good. When the content of the low-boiling organic solvent is too low, a preferred leveling effect tends to be unobtainable and when the content is too high, the organic solvent tends to remain as the residual solvent in the hard coat layer. From this point of view, the content of the low-boiling organic solvent is preferably 30 to 60 mass%, more preferably 40 to 60 mass% based on the total mass of the hard coat layer forming coating solution. The low-boiling organic solvents may be used alone or in combination of two or more. When two or more low-boiling organic solvents are used in combination, the total content of the low-boiling organic solvents should fall within the above numerical range.

In this case, the hard coat layer forming coating solution may contain another solvent besides the low-boiling organic solvent as long as its object is not impeded. Examples of the solvent include water, ethanol, methyl ethyl ketone, ethyl acetate and toluene.

When the hard coat film of the present invention is used as a protective film for a capacitance touch panel, repelling defects or pinhole-like defects must not be existent in the hard coat layer.

In this case, the solvent of the hard coat layer forming coating solution preferably contains a glycol ether. Examples of the glycol ether include propylene glycol monomethyl ether and propylene glycol monomethyl ether acetate. Out of these, propylene glycol monomethyl ether acetate is preferred as it has a great effect of reducing the number of defects.

The amount of the glycol ether is preferably 50 mass% or more, more preferably 60 mass% or more, much more preferably 75 mass% or more, particularly preferably 90 mass% or more based on the total mass of the solvents contained in the hard coat layer forming coating solution.

In this case, the hard coat layer forming coating solution may contain another solvent besides the glycol ether as long as its object is not impeded. Examples of the solvent include ketones, alcohols, esters and aromatic hydrocarbons enumerated above.

In all of the above cases, the solids content of the hard coat layer forming coating solution is preferably 1 to 70 mass%, more preferably 10 to 50 mass%. When the solids content falls within this range, the number of defects such as coating nonuniformity in the hard coat layer can be reduced without fail.

[method of forming a hard coat layer]

The hard coat layer is formed on the base film by applying the above hard coat layer forming coating solution to the base film (at least one side of the base film or the adhesive layer on the base film) to form a coating film and exposing the coating film to radiation, thereby making it possible to obtain the hard coat film of the present invention.

To apply the hard coat layer forming coating solution to the base film, a known suitable method may be employed. Preferred examples of the method include lip direct, comma coater, slit reverse, die coater, gravure roll coater, blade coater, spray coater, air knife coating, dip coating and bar coater methods. Out of these, a gravure roll coater is preferred, and a reverse gravure coater having a gravure diameter of 80 mm or less is most preferred. By using the above reverse gravure coater, the coating appearance becomes better and the effect of improving the suppression of interference nonuniformity can be enhanced.

A coating film is formed by applying the coating solution for forming the hard coat layer to the base film by any one of these coating methods and heated to form the hard coat layer.

Since it is preferred to set the thickness of the hard coat layer to the above range according to its purpose, the coating conditions of the coating solution are preferably selected and set to ensure that the thickness of the hard coat layer falls within the above desired numerical range. Suitable coating conditions can be easily determined through only a few preliminary experiments conducted by a person skilled in the art.

As for heating conditions, the coating film is preferably heated at 50 to 150°C for 10 to 180 seconds, more preferably at 50 to 122°C for 22 to 150 seconds, particularly preferably at 50 to 80°C for 30 to 122 seconds. Particularly when the hard coat layer forming coating solution in use contains 25 to 60 mass% of the above low-boiling organic solvent based on the total mass of the coating solution, a hard coat layer having a good appearance without thickness nonuniformity and containing substantially no residual solvent can be obtained by heating under the above conditions. In this case, the content of the residual solvent in the hard coat layer can be reduced to 100 ppm or less (preferably 60 ppm or less). A hard coat film having this hard coat layer can be advantageously used in a touch panel which requires high picture quality, particularly a finger input touch panel. The above unit "ppm" is based on weight.

When the solvent of the hard coat layer forming coating solution in use contains a glycol ether and the solids content of the composition is 1 to 70 mass%, repelling defects or pinhole-like defects are substantially not produced in the formed hard coat layer by heating under the above conditions. That is, the number of defects having a diameter of 30 $\mu$m or more in the hard coat layer can be reduced to 20 or less/m$^2$ (preferably 15 or less/m$^2$, more preferably 10 or less/m$^2$, particularly preferably 5 or less/m$^2$). A hard coat film having this hard coat layer can be advantageously used in a capacitance touch panel.

After heating, the coating film is exposed to radiation to be cured. The radiation to be applied herein is selected from ultraviolet radiation and electron radiation. When ultraviolet radiation is used as the radiation, its exposed dose is preferably 10 to 2,200 mJ/cm$^2$, more preferably 50 to 1,500 mJ/cm$^2$, particularly preferably 100 to 1,000 mJ/cm$^2$.

<hard coat film>

The hard coat film of the present invention obtained as described above has extremely low haze.

The haze of the hard coat film of the present invention is 2.0 % or less and can be further reduced to 1.0 % or less.

The hard coat film of the present invention having low haze can be advantageously used in a touch panel which requires high picture quality, particularly a finger input touch panel or a capacitance touch panel.

The present invention also relates to a laminate having a protective film on at least one side of the above hard coat film.

The above protective film has an adhesive layer on one side of a base film, and the Vickers hardness of a fish-eye on the adhesive layer side of the base film is preferably 0.70 or less. Even after this laminate is rolled and stored for a long time, the number of depressed defects or projecting defects (particularly depressed defects) on the surface of the base film of the hard coat film can be reduced as much as possible advantageously.

The protective film may be formed on either side of the hard coat film.

[protective film]

The protective film in the laminate of the present invention has an adhesive layer on one side of the base film. The protective film used in the laminate of the present invention must have a Vickers hardness of a fish-eye on the adhesive layer side of 0.70 or less.

- base film -

The base film in the above protective film is not particularly limited but preferably a polyester film such as a polyethylene terephthalate film; a polyolefin film such as a polyethylene, polypropylene or cycloolefin film; or a triacetyl cellulose film. Out of these, a polyester film, a polyethylene film or a polypropylene film is particularly preferred from the viewpoint of balance between mechanical properties and cost. Further, a polyethylene film is most preferred because a material having a reduced number of fish-eyes can be easily acquired.

The thickness of the base film is not particularly limited but preferably 10 to 150 $\mu$m, more preferably 15 to 75 $\mu$m. Within this range, the base film is excellent in handling ease, protection performance and slipperiness.

- adhesive layer -

The above adhesive layer is preferably fixed to the hard coat film with suitable strength when it is attached to the hard coat film. The adhesive layer which meets the above requirement is a tacky layer or an adsorbent layer.

The material used for the above tacky layer is not particularly limited but an acrylic or urethane-based adhesive is preferred from the viewpoints of optical properties and obtaining suitable adhesion that facilitates re-peeling.

The above adhesive layer is made of a soft resin whose preferred examples include ethylene vinyl alcohol copolymers.

The adhesive layer may be formed by applying a coating solution for forming the adhesive layer to the base film or by melt extrusion (so-called co-extrusion method) at the same time as the formation of the base film.

- laminate -

The laminate of the present invention is manufactured by bonding the adhesive layer side of the protective film to the hard coat film. When the hard coat film has a hard coat layer on both sides, the adhesive layer side of the protective film is bonded to the hard coat layer side of the hard coat film. When the hard coat film has a hard coat layer on only one side, the adhesive layer side of the protective film may be bonded to the hard coat layer side or the opposite side (base film side) of the hard coat film.

- fish-eye -

The term "fish-eye" in the present invention means a protrusion which is produced as an eye-like defect on the surface of a film from foreign matter derived from a resin gelled by heat or the like. This fish-eye may be caused by a gelled resin in the base film of the protective film or by a gelled resin in the adhesive layer. In the present invention, the fish-eye on the adhesive layer side of the protective film denotes both a fish-eye existent in the adhesive layer itself and a fish-eye existent in the base film and projecting to such an extent that the surface of the adhesive layer is deformed.

When the adhesive layer side of the protective film is to be bonded to the hard coat layer side of the hard coat film at the time of manufacturing the laminate of the present invention, the production of depressed defects on the surface of the hard coat layer can be suppressed by setting a fish-eye on the adhesive layer side of the protective film to the above conditions.

When the adhesive layer side of the protective film is to be bonded to the base film side of the hard coat film, the production of depressed defects on the surface of the base film and projecting defects on the surface of the hard coat layer can be suppressed by setting a fish-eye on the adhesive layer side of the protective film to the above conditions.

That is, when a hard fish-eye is existent on the adhesive layer side of the protective film, the protective film is pressed against the hard coat film by lamination pressure for bonding the protective film to the hard coat film, pressure applied by rolling after bonding, or state pressure during storage, thereby producing a depressed defect on the surface of the base film by a projecting part of the fish-eye on the protective film. When deformation reaches the opposite side, that is, the surface of the hard coat layer, a projecting defect may be produced on the surface of the hard coat layer. Since particularly the surface of the base film is softer than the surface of the hard coat layer, a depressed defect is readily produced by a fish-eye on the protective film and it is important to suppress the defect.

In the present invention, the production of depressed defects on the surface of the base film, or the production of depressed defects or projecting defects on the surface of the hard coat layer can be suppressed by setting the hardness of a fish-eye on the adhesive layer side of the protective film to the above numerical range.

From this point of view, the fish-eye on the adhesive layer side of the protective film is preferably as soft as possible, that is, a Vickers hardness of preferably 0.60 or less, more preferably 0.50 or less.

The method for reducing the Vickers hardness of the fish-eye is not particularly limited but the following methods may be used. The Vickers hardness of the fish-eye on the adhesive layer can be reduced by carrying out a coating method to form the adhesive layer. The filtering of the coating solution for forming the adhesive layer or a molten resin is reinforced to reduce the content of the hard gelled resin, thereby making it possible to reduce the number of fish-eyes having a high Vickers hardness. Further, a method in which a resin soft to some extent is selected as the material of the adhesive layer and the base layer is also preferred.

[laminate]

Even when the above laminate is stored for a long time while it is applied by pressure, for example, when it is rolled, the production of depressed or projecting defects on the surface of the base film and the surface of the hard coat layer can be suppressed, thereby making it possible to maintain its optical advantage in the hard coat film. Stated more specifically, after the above laminate is rolled and stored in a 23°C -50 %RH environment for 1 month, the number of depressed defects on the surface of the base film can be reduced to 15 or less/m$^2$.

When the number of depressed defects is 15 or less/m$^2$ and the laminate is used in a touch panel, the number of defects is so small that the laminate can be advantageously used in a capacitance touch panel. The number of depressed defects on the surface of the base film is more preferably 10 or less/m$^2$, much more preferably 5 or less/m$^2$.

Since the hard coat film in the laminate of the present invention can be advantageously used in a capacitance touch panel as described above, preferably, the surface of the hard coat film has a water contact angle of 78 to 86° and an n-dodecane contact angle of 22° or less. More preferably, the surface of the hard coat film has a water contact angle of 80 to 85° and an n-dodecane contact angle of 22° or less. Particularly preferably, the surface of the hard coat film has a water contact angle of 82 to 85° and an n-dodecane contact angle of 22° or less.

Examples

The following examples are provided to further illustrate the present invention.

Evaluations in examples and comparative examples were made by the following methods. The unit "ppm" in the following examples and comparative examples are based on weight.

(1) Glass transition temperature (Tg)

After about 10 mg of a resin sample or about 22 mg of a film sample (base film) were encapsulated into an aluminum pan for measurement, set in a differential scanning calorimeter (DSC) (DuPont Instrument 910 DSC), heated from 25°C to 290°C at a rate of 22°C/min and kept at 290°C for 3 minutes, the pan was taken out and transferred onto ice immediately to be quenched. This pan was set in DSC again and heated from 25°C at a rate of 22°C/min to measure the glass transition temperature of the sample (unit:°C).

(2) Content of (poly)alkylene glycol component

The radiation curable resin was separated into components by means of dispensing GPC to carry out heat decomposition GC-MS on each component so as to identify its structure. Thereafter, $^1$H-NMR measurement was made to determine the amount of each component from its peak integrated value so as to obtain the content of the (poly) alkylene glycol component.

[dispensing GPC conditions]

Column: JAIGEL-2H x 2, 600 x 22 mn I.D. (manufactured by Japan Analytical Industry Co., Ltd.)
Mobile phase solvent: chloroform, 3.5 ml/min

[heat decomposition GC-MS conditions]

Heat decomposition temperature: simple heat decomposition and on-line methylation heat decomposition at 600°C
Methylation agent: tetramethylammonium hydroxide (TMAH)
Column: ZB-1 having a length of 30 m, an inner diameter of 0.32 and a film thickness of 0.5 $\mu$m
GC temperature: 40°C (0 min), 15°C /min, 322°C (10 min)

[quantity determination by $^1$H-NMR]

```
Calculating formula: content = molecular weight x (integral
ratio/number of ¹H's), standardized to ensure that the total
becomes 100
```

Based on the presumption that the GPC area ratio of pentaerythritol triacrylate and dipentaerythritol pentaacrylate is equal to the weight ratio of these, the integral value (1, 000) of the acrylic group measured by $^1$H-NMR is divided based on the ratio.

(3) Thickness of hard coat layer

The sample film was cut with a sharp razor to observe the obtained section through an optical microscope so as to measure the thickness of the hard coat layer. Arbitrary 10 sites of the sample were measured to obtain the average value of the measurement data as the thickness of the hard coat layer (unit; $\mu$m).

(4) Coating appearance of hard coat layer

The surface opposite to the hard coat layer of the hard coat film was colored black and the surface on the hard coat layer side was illuminated with a three-wavelength fluorescent lamp to observe its interference nonuniformity and evaluate it based on the following criteria.

O: no interference nonuniformity is seen
$\times$: interference nonuniformity is seen vividly

(5) Contact angle

[water contact angle]

After 0.2 mL of distilled water was dropped on the surface of the hard coat layer from a height of 5 slowly by means of a syringe and left for 30 seconds, its contact angle (angle between the surface of the hard coat layer and the tangent of a droplet) was observed through a CCD camera to be measured. This operation was repeated 5 times to obtain the average value as water contact angle.

[n-dodecane contact angle]

This was measured in the same manner as the water contact angle except that n-dodecane was used as a measurement liquid. When the contact angle is 22° or less, the value of the contact angle cannot be obtained accurately and therefore, a contact angle of 22° or less is taken as a measurement value.

(6) Pencil hardness

The pencil hardness is based on JIS K5600.
The evaluation was made on the surface of the hard coat layer of the hard coat film.

(7) Adhesion

[initial adhesion]

A 25 mm-wide polyester adhesive tape (No. 31B of Nitto Denko Corporation) was affixed to the surface of the hard coat layer by means of a 500 g weight roller and a peel tester was used to strip the tape at 180° so as to measure the peel force (unit: g/25 mm) of the tape. Thus, initial adhesion between the adhesive and the hard coat layer was evaluated.

In the evaluation of initial adhesion, when peel force is 1, 000 g or more/25 mm, initial adhesion is accepted. When peel force falls within the above numerical range, the hard coat film of the present invention has sufficiently high initial adhesion as a hard coat film for a capacitance touch panel.

[age adhesion]

A sample was prepared by affixing an adhesive tape to the surface of the hard coat layer in the same manner as in the evaluation of initial adhesion. After this sample was kept in a 60°C-90 %RH environment for 240 hours, its peel force was measured in the same manner as initial adhesion to evaluate age adhesion between the adhesive and the hard coat layer.

In the evaluation of age adhesion, when peel force is 1, 000 g or more/25 mm, age adhesion is accepted. When peel force falls within the above numerical range, the hard coat film of the present invention has sufficiently high age adhesion as a hard coat film for a capacitance touch panel.

(8) Haze

The haze of the hard coat film was measured by means of the HCM-2B haze meter of Suga Test Instruments Co., Ltd. in accordance with JIS K7105. Measurement light was applied to the hard coat layer side. Arbitrary 5 sites of the film sample were measured and the average value was taken as haze (unit: %).

(9) Fingerprint resistance

[visibility of fingerprint]

The hard coat film with the hard coat layer facing up was placed on a glass plate whose rear surface was painted black, and a finger was pressed against the end of the hard coat film so that half of the fingerprint was adhered to the hard coat layer and the other half was adhered to the glass surface at the same time. The fingerprint was seen from the front side to judge its visibility based on the following criteria.

○: fingerprint on hard coat layer is rarely seen
△: fingerprint on hard coat layer and fingerprint on glass stand out equally
✕: fingerprint on hard coat layer stands out more than fingerprint on glass

[wipe-off property of fingerprint]

After a finger was pressed against the surface of the hard coat layer of the hard coat film to adhere its fingerprint to the surface, tissue paper was used to wipe off the fingerprint with 5 reciprocal motions. Then, the visibility of the fingerprint was judged based on the following criteria.

○: after fingerprint is wiped off, it is not seen
△: fingerprint wipe-off mark remains
✕: fingerprint component merely spreads and fingerprint is rarely wiped off

(10) Evaluation of defects 1 (number of defects having a diameter of 30 μm or more)

[detection of defects]

A sample having an area of 1 m² was collected from a portion excluding a 5 cm area from the edge of the hard coat film. The obtained sample was placed on a black inspection table in such a manner that the hard coat layer faced up and illuminated by a three-wavelength fluorescent lamp (manufactured by Panasonic Corporation, 32 W) from a distance of 50 cm above to detect defects visually.

The minimum size (diameter) of a defect which can be detected (recognized) by this method is about 30 $\mu$m.

[size of defect]

The detected defects were observed through an optical microscope at a magnification of 50 to 200X to measure the maximum length (diameter) of each defect with a scale so as to count the number of defects having a maximum length of 30 $\mu$m or more. Defects having a maximum length of less than 30 $\mu$m were not counted.

Defects to be observed can be recognized as spots having an apparently different contrast from that of the surrounding part in the view field of the optical microscope.

(11) Evaluation of defects 2 (number of depressed defects)

A laminate having a protective film was rolled up to a length of 200 m at a rate of 10 m/min and a wind-up tension of 60 N/m without applying contact pressure using no touch roll. This roll was stored in a 23°C-50 %RH environment for 1 month. Thereafter, a sample was collected at a length of 100 m from the outermost layer of the roll and the protective film was separated from the obtained laminate to obtain a hard coat film.

The obtained hard coat film was placed on a black inspection table in such a manner that the hard coat layer faced down and illuminated by a three-wavelength fluorescent lamp (1,200 lux or more) from a distance of 50 cm above so as to count the number of depressed defects (which had a diameter of 0.5 mm or more and were visible with a naked eye) within a 1 $m^2$ area.

When the count number of the depressed defects is 15 or less/$m^2$, the yield of the hard coat film when incorporated into a touch panel can be estimated at a substantially satisfactory level.

(12) Viscosity and boiling point of solvent

[viscosity]

The viscosity of a solvent was measured at 28 °C by using the VM-10A microvibration viscometer of CBC Co., Ltd.

[boiling point]

A value described in "4th edition of Kagaku Binran Kiso Hen" (edited by The Chemical Society of Japan, published by Maruzen) or a value described in MSDS of the solvent used was adopted as the boiling point of the solvent.

(13) Amount of residual solvent

After about 0.5 g of the hard coat film was put into a vial container and the container was closed airtight, it was heated at 150°C for 60 minutes to measure the amount of the residual solvent by a head-space GC-MS method.

The amount of the residual solvent in the hard coat film obtained by the present invention is preferably 100 ppm or less, more preferably 60 ppm or less. When the amount of the residual solvent falls within this range, the production of a gas in a post step such as heating step or evacuation step can be suppressed and the occurrence of a problem caused by the gas can be prevented.

(14) Hardness of fish-eye

The Vickers hardness of a fish-eye on the adhesive layer side surface of the protective film was measured by means of a microhardness meter (ENT-1100a of Elionix Inc.) in accordance with JIS Z2244. The depression depth was 5 $\mu$m. The size of the fish-eye was several tens of $\mu$m which is much larger than the diameter of a measuring terminal. Heed was taken to depressing the center portion of the fish-eye as much as possible at the time of inspection. This measurement was made on 30 fish-eyes having a long diameter of 20 $\mu$m or more and a height of 3 $\mu$m or more extracted at random from a sample having an area of 1 $m^2$ (when the number of fish-eyes was smaller than 30, all of the fish-eyes were measured), and the average value of the measurement data was taken as the Vickers hardness of the fish-eye. The long diameter and height of each fish-eye were checked by an optical microscope and a laser microscope.

<manufacture and evaluation of hard coat film for finger input touch panel>

Example 1-1

[base film]

A base film prepared by coating both sides of a 188 μm-thick polyethylene terephthalate (PET) film with an adhesive layer was used in this example. Coating with the adhesive layer was carried out as follows.

The following components were first mixed together in a solid mass ratio of polyester resin/crosslinking agent/ fine particles/aliphatic wax/surfactant of 65/20/5/5/5, and the resulting mixture was diluted with ion exchange water to a solids content of 5 mass% so as to prepare a coating solution for forming an adhesive layer. Polyester resin: dicarboxylic acid component consisting of 65 mol% of 2,6-naphthalenedicarboxylic acid, 30 mol% of isophthalic acid and 5 mol% of 5-sodium sulfoisophthalic acid and glycol component consisting of 90 mol% of ethylene glycol and 10 mol% of diethylene glycol. Tg = 80°C, number average molecular weight Mn = 13,000

Crosslinking agent: consisting of 30 mol% of methyl methacrylate, 30 mol% of 2-isopropenyl-2-oxazoline, 10 mol% of polyethylene oxide (number "n" of recurring units = 10) methacrylate and 30 mol% of acrylamide. Tg = 50°C

Fine particles: silica filler (average particle diameter of 100 nm) (Snowtex ZL of Nissan Chemical Industries, Ltd.) Aliphatic wax: carnauba wax (Cellosol 524 of Chukyou Yushi Co., Ltd.)

Surfactant: polyoxyethylene (number "n" of recurring units = 7) lauryl ether (Nanoacty N-70 of Sanyo Chemical Industries, Ltd.)

The in-line coating of the both sides of the base film with the above obtained coating solution was carried out after the base film was stretched in a longitudinal direction before it was stretched in a transverse direction in the production process of the base film (production process of a biaxially oriented PET film in accordance with a commonly used method) to obtain a base film having a 0.15 μm-thick adhesive layer on both sides.

[preparation of coating solution for forming a hard coat layer]

The Beam Set 1460 radiation curable resin (trade name, manufactured by Arakawa Chemical Industries, Ltd., comprising a resin obtained by copolymerizing an acrylic polymer containing pentaerythritol triacrylate and dipentaerythritol pentaacrylate (mass ratio: 83/17) with 2.9 mass% based on the above acrylic polymer of a recurring ethylene glycol unit (polyethylene glycol having a molecular weight of 2,000 to 6,000) as a (poly)alkylene glycol component and a photopolymerization initiator as main components. Solids content of 90 mass%) was diluted with methyl ethyl ketone (MEK) to obtain a coating solution for forming a hard coat layer, having a solids content of 40 mass%. It was confirmed by analysis such as $^1$H-NMR, IR and GC-MS that the (poly) alkylene glycol component was copolymerized.

[formation of hard coat layer]

The coating solution for forming a hard coat layer obtained above was uniformly applied to one side (surface of the adhesive layer) of the base film with a roll coater to ensure that the film thickness after drying and curing became 1.5 μm and dried at 70°C for 2 minutes. Then, an ultraviolet irradiation apparatus (Fusion H Bulb of Fusion UV Systems Japan KK) was used to apply 220 mJ/cm$^2$ of ultraviolet radiation to the film to obtain a hard coat film. The characteristic properties of the obtained hard coat layer and the hard coat film are shown in Table 1.

Example 1-2

A hard coat film was obtained in the same manner as in Example 1-1 except that a radiation curable resin comprising a recurring ethylene glycol unit in an amount of 2.2 mass% based on the mass of the acrylic polymer was used in the preparation of the coating solution for forming a hard coat layer in Example 1-1. The characteristic properties of the obtained hard coat layer and the hard coat film are shown in Table 1.

Example 1-3

A hard coat film was obtained in the same manner as in Example 1-1 except that a radiation curable resin comprising a recurring ethylene glycol unit in an amount of 3.8 mass% based on the mass of the acrylic polymer was used in the preparation of the coating solution for forming a hard coat layer in Example 1-1. The characteristic properties of the obtained hard coat layer and the hard coat film are shown in Table 1.

Example 1-4

A hard coat film was obtained in the same manner as in Example 1-1 except that the thickness of the hard coat layer was changed to 6.0 μm in the formation of the hard coat layer in Example 1-1. The characteristic properties of the obtained hard coat layer and the hard coat film are shown in Table 1.

Example 1-5

A hard coat film was obtained in the same manner as in Example 1-1 except that a 50 μm-thick polyethylene terephthalate (PET) film coated with an adhesive layer on both sides was used as the base film and that a coating solution for forming a hard coat layer prepared by diluting Olex JU116 (manufactured by Chugoku Marine Paints, Ltd., solids content of 50 mass%) with MEK to a solids content of 40 mass% was used. The characteristic properties of the obtained hard coat layer and the hard coat film are shown in Table 1.
The coating of the base film of this example with the adhesive layer was carried out in the same manner as in Example 1-1.

Example 1-6

A hard coat film was obtained in the same manner as in Example 1-5 except that a coating solution for forming a hard coat layer prepared by diluting Olex JU114 (manufactured by Chugoku Marine Paints, Ltd., solids content of 50 mass%) with MEK to a solids content of 40 mass% was used in the formation of the hard coat layer in the above Example 1-5. The characteristic properties of the obtained hard coat layer and the hard coat film are shown in Table 1.

Example 1-7

A hard coat film was obtained in the same manner as in Example 1-5 except that Z880 (manufactured by Aica Kogyo Co., Ltd., solids content of 30 mass%) was used directly without being diluted as the coating solution for forming a hard coat layer in the formation of the hard coat layer in the above Example 1-5. The characteristic properties of the obtained hard coat layer and the hard coat film are shown in Table 1.

Example 1-8

A hard coat film was obtained in the same manner as in Example 1-1 except that a 50 μm-thick polyethylene terephthalate (PET) film coated with an adhesive layer on both sides was used as the base film in the formation of the hard coat layer in the above Example 1-1. The characteristic properties of the obtained hard coat layer and the hard coat film are shown in Table 1.
The coating of the base film of this example with the adhesive layer was carried out in the same manner as in Example 1-1.

Comparative Example 1-1

A hard coat film was obtained in the same manner as in Example 1-1 except that a coating solution for forming a hard coat layer prepared below was used in the formation of the hard coat layer in the above Example 1-1. The characteristic properties of the obtained hard coat layer and the hard coat film are shown in Table 1.

[preparation of coating solution for forming a hard coat layer]

A surfactant (KP-341 (trade name) of Shin-Etsu Chemical Co., Ltd., solids content of 80 mass%) was added to a radiation curable resin comprising an urethane acrylate oligomer as the main component (Beam Set 575CB (trade name) of Arakawa Chemical Industries, Ltd., solids content of 70 mass%) in an amount of 0.25 mass% based on 100 mass% of the solids content of the radiation curable resin to adjust the wettability of the surface of the hard coat layer, and the resulting mixture was diluted with MEK to obtain a coating solution for forming a hard coat layer, having a solids content of 40 mass%.

Comparative Example 1-2

A hard coat film was obtained in the same manner as in Example 1-1 except that a coating solution for forming a hard coat layer prepared below was used in the formation of the hard coat layer in the above Example 1-1. The characteristic properties of the obtained hard coat layer and the hard coat film are shown in Table 1.

[preparation of coating solution for forming a hard coat layer]

A coating solution for forming a hard coat layer, having a solids content of 40 mass%, was obtained by diluting a radiation curable resin comprising dipentaerythritol hexaacrylate as the main component (Z7501 (trade name) of JSR Corporation, solids content of 50 mass%) with MEK.

Table 1

| | Thickness of hard coat layer (μm) | Contact angle of the surface of hard coat layer | | Evaluation of fingerprint resistance | | Pencil hardness | Evaluation of adhesion | | Haze (%) |
|---|---|---|---|---|---|---|---|---|---|
| | | Water | n-dodecane | Visibility of fingerprint | Wipe-off property of fingerprint | | Initial adhesion (peel force) (g/25mm) | Age adhesion (peel force) (g/25mm) | |
| Ex. 1-1 | 1.5 | 83.4° | 22° or less | ○ | ○ | H | more than 1,000 | more than 1,000 | 0.9 |
| Ex. 1.2 | 1.5 | 87.2° | 22° or less | ○ | ○ | H | more than 1,000 | more than 1,000 | 0.9 |
| Ex. 1-3 | 1.5 | 80.6° | 22° or less | ○ | ○ | H | more than 1,000 | more than 1,000 | 0.9 |
| Ex. 1-4 | 6.0 | 84.0° | 22° or less | ○ | ○ | 3H | more than 1,000 | more than 1,000 | 1.0 |
| Ex. 1-5 | 1.5 | 84.1° | 22° or less | ○ | ○ | H | more than 1,000 | more than 1,000 | 0.4 |
| Ex. 1-6 | 1.5 | 84.8° | 22° or less | ○ | ○ | H | more than 1,000 | more than 1,000 | 0.3 |
| Ex. 1-7 | 1.5 | 83.3° | 22° or less | ○ | ○ | H | more than 1,000 | more than 1,000 | 0.3 |
| Ex. 1-8 | 1.5 | 83.4° | 22° or less | ○ | ○ | H | more than 1,000 | more than 1,000 | 0.3 |
| C.Ex. 1-1 | 1.5 | 91.5° | 27.3° | × | ○ | H | 780 | 450 | 1.0 |
| C.Ex. 1-2 | 1.5 | 77.0° | 22° or less | ○ | × | H | more than 1,000 | more than 1,000 | 0.9 |
| Ex.: Example C.Ex.: Comparative Example | | | | | | | | | |

Example 2-1

[base film]

The 03LF8W-188 PET film having an adhesive layer on both sides (manufactured by Teij in DuPont Films Japan Limited, thickness of 188 $\mu$m, adhesive layer comprising polyester/polyacrylate as the main component) was used as the base film in this example.

[preparation of coating solution for forming a hard coat layer]

100 parts by mass of the Beam Set 1460 radiation curable resin (trade name, manufactured by Arakawa Chemical Industries, Ltd., comprising a resin obtained by copolymerizing an acrylic polymer containing pentaerythritol triacrylate and dipentaerythritol pentaacrylate (mass ratio: 83/17) with 2.9 mass% based on the above acrylic polymer of a recurring ethylene glycol unit (polyethylene glycol having a molecular weight of 2,000 to 6,000) as a (poly)alkylene glycol component and a photopolymerization initiator as the main components. Mixed solution of methyl ethyl ketone (MEK, viscosity of 0.4 mPa· s, boiling point of 80°C) and xylene (viscosity of 0.59 mPa· s, boiling point of 138 to 144°C) in mass ratio of 9/1, solids content of 80 mass%) was diluted with 135 parts by mass of t-butanol (viscosity of 2.0 mPa· s, boiling point of 82°C) to obtain a coating solution having a solids content of 34 mass%. The content of t-butanol in the obtained coating solution was 57.4 mass%. It was confirmed by analysis such as $^1$H-NMR, IR and GC-MS that the (poly) alkylene glycol component was copolymerized.

[formation of hard coat layer]

The coating solution for forming a hard coat layer obtained above was uniformly applied to one side (surface of the adhesive layer) of the base film with a small-diameter reverse gravure roll coater (diameter of 65 mm) to ensure that the film thickness after drying and curing became 6.0 $\mu$m and dried at 70°C for 2 minutes. Then, an ultraviolet irradiation apparatus (Fusion H Bulb (trade name) of Fusion UV Systems Japan KK) was used to apply 200 mJ/cm$^2$ of ultraviolet radiation to the coating film so as to obtain a hard coat film. The characteristic properties of the obtained hard coat layer and the hard coat film are shown in Table 2.

Example 2-2

A hard coat film was obtained in the same manner as in Example 2-1 except that isopropanol (viscosity of 2.4 mPa · s, boiling point of 82°C) was used in place of t-butanol in the preparation of the coating solution for forming a hard coat layer in the above Example 2-1. The characteristic properties of the obtained hard coat film are shown in Table 2.

Example 2-3

A hard coat film was obtained in the same manner as in Example 2-1 except that the amount of t-butanol was changed to 100 parts by mass based on 100 parts by mass of the radiation curable resin and 35 parts by mass of MEK (viscosity of 0.4 mPa· s, boiling point of 80°C) was added to 100 parts by mass of the radiation curable resin in the preparation of the coating solution for forming a hard coat layer in the above Example 2-1. The characteristic properties of the obtained hard coat film are shown in Table 2.

Example 2-4

A hard coat film was obtained in the same manner as in Example 2-1 except that the amount of t-butanol was changed to 70 parts by mass based on 100 parts by mass of the radiation curable resin and 65 parts by mass of MEK (viscosity of 0.4 mPa· s , boiling point of 80 °C) was added to 100 parts by mass of the radiation curable resin in the preparation of the coating solution for forming a hard coat layer in the above Example 2-1. The characteristic properties of the obtained hard coat film are shown in Table 2.

Example 2-5

A hard coat film was obtained in the same manner as in Example 2-1 except that MEK (viscosity of 0.4 mPa· s. boiling point of 80°C) was used in place of t-butanol in the preparation of the coating solution for forming a hard coat layer in the above Example 2-1. The characteristic properties of the obtained hard coat film are shown in Table 2.

Example 2-6

A hard coat film was obtained in the same manner as in Example 2-1 except that sec-butanol (viscosity of 4.2 mPa · s, boiling point of 99°C) was used in place of t-butanol in the preparation of the coating solution for forming a hard coat layer in the above Example 2-1. The characteristic properties of the obtained hard coat film are shown in Table 2.

Example 2-7

A hard coat film was obtained in the same manner as in Example 2-1 except that cyclohexanone (viscosity of 2.2 mPa· s, boiling point of 155 °C) was used in place of t-butanol in the preparation of the coating solution for forming a hard coat layer in the above Example 2-1. The characteristic properties of the obtained hard coat film are shown in Table 2.

Table 2

| | Organic solvent | | | | Hard coat layer | | | |
| | Type | Boiling point (°C) | Viscosity (mPa·s) | Content (mass %) | Film thickness (μm) | Coating appearance | Surface contact angles | |
| | | | | | | | Water | n-dodecane |
| Ex.2-1 | t-butanol | 82 | 2 | 57.4 | 6 | ○ | 84.0° | 22° or less |
| Ex.2-2 | isopropanol | 82 | 2.4 | 57.4 | 6 | ○ | 84.0° | 22° or less |
| Ex.2-3 | t-butanol | 82 | 2 | 42.6 | 6 | ○ | 84.0° | 22° or less |
| | MEK | 80 | 0.4 | 14.9 | | | | |
| Ex.2-4 | t-butanol | 82 | 2 | 29.8 | 6 | ○ | 84.0° | 22° or less |
| | MEK | 80 | 0.4 | 27.7 | | | | |
| Ex.2-5 | MEK | 80 | 0.4 | 57.4 | 6 | × | 84.0° | 22° or less |
| Ex.2-6 | Sec-butanol | 99 | 4.2 | 57.4 | 6 | × | 84.0° | 22° or less |
| Ex.2-7 | Cyclohexanone | 155 | 2.2 | 57.4 | 6 | ○ | 84.0° | 22° or less |

Ex.: Example

Table 2 (continued)

| | Evaluation of fingerprint resistance | | Residual solvent (ppm) | Pencil hardness |
|---|---|---|---|---|
| | Visibility of fingerprint | Wipe-off property of fingerprint | | |
| Ex.2-1 | ○ | ○ | 56 | 3H |
| Ex.2-2 | ○ | ○ | 38 | 3H |
| Ex.2-3 | ○ | ○ | 48 | 3H |
| Ex.2-4 | ○ | ○ | 40 | 3H |
| Ex.2-5 | ○ | ○ | 25 | 3H |
| Ex.2-6 | ○ | ○ | 65 | 3H |
| Ex.2-7 | ○ | ○ | 1,142 | 3H |

Ex.: Example

<manufacture and evaluation of hard coat film for capacitance touch panel>

Example 3-1

[base film]

A 38 $\mu$m-thick polyethylene terephthalate (PET) film (containing substantially no particles (particle content of 10 ppm or less)) coated with an adhesive layer on both sides was used as the base film in this example. The formation of the adhesive layer was carried out in the same manner as in Example 1-1 by using a coating solution prepared in the same manner as in Example 1-1.

[preparation of coating solution for forming a hard coat layer]

100 parts by mass of the Beam Set 1460 radiation curable resin (trade name, manufactured by Arakawa Chemical Industries, Ltd., comprising a resin obtained by copolymerizing an acrylic polymer containing pentaerythritol triacrylate and dipentaerythritol pentaacrylate (mass ratio: 83/17) with 2.9 mass% based on the above acrylic polymer of a recurring ethylene glycol unit (polyethylene glycol having a molecular weight of 2,000 to 6,000) as a (poly)alkylene glycol component and a photopolymerization initiator as the main components. Mixed solution of methyl ethyl ketone (MEK, viscosity of 0.4 mPa. s, boiling point of 80°C) and xylene (viscosity of 0.59 mPa. s, boiling point of 138 to 144°C) in mass ratio of 9/1, solids content of 90 mass%) was diluted with propylene glycol monomethyl ether acetate (PGMEA) to obtain a coating solution having a solids content of 40 mass%. It was confirmed by analysis such as $^1$H-NMR, IR and GC-MS that the (poly)alkylene glycol component was copolymerized.

[formation of hard coat layer]

A hard coat film was obtained in the same manner as in Example 1-1 except that the coating solution prepared above was used as the coating solution for forming a hard coat layer in the formation of the hard coat layer in the above Example 1-1.
The characteristic properties of the obtained hard coat layer and the hard coat film are shown in Table 3.

Example 3-2

A hard coat film was obtained in the same manner as in Example 3-1 except that the thickness of the PET film (containing substantially no particles) in the base film was changed to 50 $\mu$m and the thickness of the hard coat layer was changed to 3.0 $\mu$m. The characteristic properties of the obtained hard coat layer and the hard coat film are shown in Table 3.

Example 3-3

A hard coat film was obtained in the same manner as in Example 3-1 except that a coating solution prepared by diluting Olex JU116 (manufactured by Chugoku Marine Paints, Ltd., solids content of 50 mass%, solvent: MEK/methyl isobutyl ketone (MIBK)) with PGMEA to a solid contents of 30 mass% was used as the coating solution for forming a hard coat layer in the formation of the hard coat layer in the above Example 3-1. The characteristic properties of the obtained hard coat layer and the hard coat film are shown in Table 3.

Example 3-4

A hard coat film was obtained in the same manner as in Example 3-1 except that MEEK was used in place of PGMEA as a diluting solvent in the preparation of the coating solution for forming a hard coat layer in the above Example 3-1. The characteristic properties of the obtained hard coat layer and the hard coat film are shown in Table 3.

Example 3-5

A hard coat film was obtained in the same manner as in Example 3-3 except that MEK was used in place of PGMEA as a diluting solvent in the above Example 3-3. The characteristic properties of the obtained hard coat layer and the hard coat film are shown in Table 3.

Comparative Example 3-1

A hard coat film was obtained in the same manner as in Example 3-1 except that a coating solution obtained in the same manner as in the preparation of the coating solution for forming a hard coat layer in the above Comparative Example 1-1 was used as the coating solution for forming a hard coat layer in the formation of the hard coat layer in the above Example 3-1. The characteristic properties of the obtained hard coat layer and the hard coat film are shown in Table 3.
In the above Examples 3-1 to 3-3, hard coat films having excellent adhesion were obtained. When capacitance touch panels were manufactured by using these hard coat films as carrier films and placed on the screen of a high-definition LCD to check visibility, almost no defects were seen on the screen and therefore, they were excellent in visibility. Although hard coat films having excellent adhesion were obtained in Examples 3-4 and 3-5, when these films were used in a capacitance touch panel, the number of defects on the screen was slightly large and the effect of improving visibility which should be attained in a preferred embodiment was not so marked.
In contrast to this, the hard coat film obtained in Comparative Example 3-1 was inferior in adhesion.

Table 3

| | Thickness of hard coat layer (μm) | Contact angles of surface of hard coat layer | | Evaluation of adhesion | | Pencil hardness | Number of defects having a diameter of 30 μm or more (number/m²) | Haze (%) |
|---|---|---|---|---|---|---|---|---|
| | | Water | n-dodecane | Initial adhesion (peel force) (g/25mm) | Age adhesion (peel force) (g/25mm) | | | |
| Ex.3-1 | 1.5 | 83.4° | less than 22° | more than 1,000 | more than 1,000 | H | 3 | 0.3 |
| Ex.3-2 | 3.0 | 84.0° | less than 22° | more than 1,000 | more than 1,000 | 2H | 2 | 0.4 |
| Ex.3-3 | 1.5 | 84.1° | less than 22° | more than 1,000 | more than 1,000 | H | 6 | 0.4 |
| Ex.3-4 | 1.5 | 83.8° | less than 22° | more than 1,000 | more than 1,000 | H | 25 | 0.4 |
| Ex.3-5 | 1.5 | 84.6° | less than 22° | more than 1,000 | more than 1,000 | H | 30 | 0.4 |
| C.Ex. 3-1 | 1.5 | 91.5° | 27.3° | 780 | 450 | H | 5 | 0.4 |
| Ex.: Example C.Ex.: Comparative Example | | | | | | | | |

<manufacture and evaluation of laminate having a protective film>

Example 4-1

[base film]

A 38 μm-thick polyethylene terephthalate (PET) film coated with an adhesive layer on both sides was used as the base film in this example. The adhesive layer was formed in the same manner as in Example 1-1 by using a coating solution prepared in the same manner as in Example 1-1.

[formation of hard coat layer]

A coating solution for forming a hard coat layer was prepared in the same manner as in the above Example 1-1 and a hard coat film was obtained in the same manner as in Example 1-1 except that the coating solution for forming a hard coat layer was applied to ensure that the thickness of the coating film after drying and curing became 1.7 μm.

[bonding of protective film]

PAC3-60T (of Sun A. Kaken Co., Ltd.) as a protective film was bonded to the base film side of the hard coat film obtained above by means of a pressure roller in such a manner that the adhesive layer of the protective film was situated on the base film side to obtain a laminate.

The characteristic properties of the protective film used in this example and the hard coat film obtained after the protective film was removed are shown in Table 4.

Example 4-2

A laminate was obtained in the same manner as in Example 4-1 except that JA-16F (of Sun A. Kaken Co., Ltd.) was used as a protective film.

The characteristic properties of the protective film used in this example and the hard coat film obtained after the protective film was removed are shown in Table 4.

Example 4-3

A laminate was obtained in the same manner as in Example 4-1 except that JA-13K (of Sun A. Kaken Co., Ltd.) was used as a protective film.

The characteristic properties of the protective film used in this example and the hard coat film obtained after the protective film was removed are shown in Table 4.

Comparative Example 4-1

A laminate was obtained in the same manner as in Example 4-1 except that PAC3-60 (of Sun A. Kaken Co. , Ltd.) was used as a protective film.

The characteristic properties of the protective film used in this example and the hard coat film obtained after the protective film was removed are shown in Table 4.

Comparative Example 4-2

A laminate was obtained in the same manner as in Example 4-1 except that FM-4150B (of Daio Paper Converting Co. , Ltd.) was used as a protective film.

The characteristic properties of the protective film used in this example and the hard coat film obtained after the protective film was removed are shown in Table 4.

Table 4

| | Protective film | | Hard coat film | | | | | Evaluation of adhesion | | Number of depressed defects (number/ m²) |
|---|---|---|---|---|---|---|---|---|---|---|
| | Type | Vickers hardness of fish-eye | Thickness of hard coat layer (μm) | Water contact angle | n-dodecane contact angle | Pencil hardness | Haze (%) | Initial (peel force) (g/25mm) | Age adhesion (peel force) (g/25mm) | |
| Ex. 4-1 | PAC3-60T | 0.67 | 1.7 | 84.1° | less than 22° | H | 0.3 | more than 1,000 | more than 1,000 | 5 |
| Ex. 4-2 | JA16F | 0.61 | 1.7 | 84.4° | less than 22° | H | 0.3 | more than 1,000 | more than 1,000 | 1 |
| Ex. 4-3 | JA13K | 0.63 | 1.7 | 84.3° | less than 22° | H | 0.3 | more than 1,000 | more than 1,000 | 2 |
| C.Ex. 4-1 | PAC3-60 | 0.78 | 1.7 | 84.6° | less than 22° | H | 0.3 | more than 1,000 | more than 1,000 | more than 50 |
| C.Ex. 4-2 | FM-4150B | 0.86 | 1.7 | 84.1° | less than 22° | H | 0.3 | more than 1,000 | more than 1,000 | more than 50 |

Ex.: Example C.Ex.: Comparative Example

Effect of the Invention

According to the present invention, there is provided a hard coat film which has excellent fingerprint resistance when it is touched by a finger as in a finger input touch panel and preferably has a low content of the residual solvent; which has excellent adhesion to the surface of a film having an ITO layer constituting a touch panel and/or a display and does not have any defects disturbing optical inspection when it is used as a protective film for a capacitance touch panel; and which preferably has high uniformity in film thickness.

Further, there is provided a hard coat film with a protective film which is free from depressed defects even after it is stored for a long time, which is preferred when it is stored as a roll.

**Claims**

1. A hard coat film having a hard coat layer on at least one side of a base film, wherein the surface of the hard coat layer has a water contact angle of 78 to 90° and an n-dodecane contact angle of 22° or less.

2. The hard coat film according to claim 1 which has an adhesive layer formed from a composition containing a polyester resin and a crosslinking agent between the base film and the hard coat layer.

3. The hard coat film according to claim 1 which has a haze of 2.0 % or less.

4. The hard coat film according to claim 1, wherein the number of defects having a diameter of 30 $\mu$m or more in the hard coat layer is 20 or less/m$^2$.

5. The hard coat film according to claim 1, wherein the hard coat layer comprises a cured product of a copolymer of a polyfunctional (meth)acrylate and a (poly)alkylene glycol.

6. The hard coat film according to any one of claims 1 to 5, wherein the surface of the hard coat layer has a water contact angle of 80 to 88°.

7. The hard coat film according to claim 6 which is used in a finger input touch panel.

8. The hard coat film according to any one of claims 1 to 5 which has a water contact angle of the surface of the hard coat layer of 78 to 86° and is used in a capacitance touch panel.

9. The hard coat film according to claim 8 which has a haze of 1.0 % or less.

10. A method for manufacturing the hard coat film of claim 1, comprising the steps of:

    applying a composition containing a radiation curable resin and a solvent to at least one side of a base film to form a coating film; and
    exposing the coating film to radiation to form a hard coat layer.

11. The method according to claim 10, wherein the solvent contains a low-boiling organic solvent having a boiling point of 120°C or lower and a viscosity of 1.5 to 3.0 mPa · s, and the content of the low-boiling organic solvent is 25 to 60 wt% based on the total weight of the composition.

12. The method according to claim 11, wherein the surface of the hard coat layer has a water contact angle of 80 to 88°.

13. The method according to claim 12, wherein the hard coat film is used in a finger input touch panel.

14. The method according to claim 10, wherein the solvent contains glycol ether, the solids content of the composition is 1 to 70 wt%, and the coating film is heated at 50 to 180°C for 10 to 180 seconds after the application of the composition and before exposure to radiation in the step of forming the hard coat layer.

15. The method according to claim 14, wherein the number of defects having a diameter of 30 $\mu$m or more in the hard coat layer is 20 or less/m$^2$.

16. The hard coat film according to claim 15 which has a water contact angle of the surface of the hard coat layer of 78 to 86° and is used in a capacitance touch panel.

17. A laminate having a protective film on at least one side of the hard coat film of claim 1, wherein the protective film has an adhesive layer on at least one side of a base film; and the Vickers hardness of a fish-eye on the adhesive layer side of the protective film is 0.70 or less.

18. The laminate according to claim 17, wherein the surface of the hard coat layer has a water contact angle of 78 to 86° and the hard coat film is used in a capacitance touch panel.

**INTERNATIONAL SEARCH REPORT**

| International application No. |
| --- |
| PCT/JP2011/054423 |

A.  CLASSIFICATION OF SUBJECT MATTER
*B32B27/00*(2006.01)i, *B32B27/30*(2006.01)i

According to International Patent Classification (IPC) or to both national classification and IPC

B.  FIELDS SEARCHED

Minimum documentation searched (classification system followed by classification symbols)
B32B1/00-43/00

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2004-359834 A  (Mitsubishi Chemical Corp.), 24 December 2004 (24.12.2004), | 1,3-7,10-15, 17 |
| Y | claims; paragraphs [0004], [0007] to [0099] (Family: none) | 2,8,9,16,18 |
| X | JP 2007-320112 A  (Shin-Etsu Polymer Co., Ltd.), 13 December 2007 (13.12.2007), paragraphs [0032], [0035] (Family: none) | 1,6 |
| Y | JP 9-226079 A  (Toray Industries, Inc.), 02 September 1997 (02.09.1997), claims; paragraphs [0117] to [0123] (Family: none) | 2 |

☒  Further documents are listed in the continuation of Box C.     ☐  See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 10 March, 2011 (10.03.11) | 22 March, 2011 (22.03.11) |

| Name and mailing address of the ISA/ Japanese Patent Office | Authorized officer |
| --- | --- |
| Facsimile No. | Telephone No. |

Form PCT/ISA/210 (second sheet) (July 2009)

32

**INTERNATIONAL SEARCH REPORT**

| International application No. |
|---|
| PCT/JP2011/054423 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-25734 A (NOF Corp.),<br>05 February 2009 (05.02.2009),<br>claims; paragraph [0054]<br>(Family: none) | 8,16,18 |
| Y | JP 2009-302013 A (NOF Corp.),<br>24 December 2009 (24.12.2009),<br>claims; paragraphs [0025] to [0068]<br>& CN 101630541 A          & KR 10-2009-0131250 A | 9 |
| A | JP 2006-188557 A (Lintec Corp.),<br>20 July 2006 (20.07.2006),<br>entire text<br>& US 2007/0298248 A1     & EP 1835001 A1<br>& KR 10-2007-0091033 A   & CN 101111580 A | 1-18 |
| A | JP 2008-56789 A (Nippon Paint Co., Ltd.),<br>13 March 2008 (13.03.2008),<br>entire text<br>(Family: none) | 1-18 |
| A | JP 2010-44687 A (Oike & Co., Ltd.),<br>25 February 2010 (25.02.2010),<br>entire text<br>(Family: none) | 1-18 |
| A | JP 11-217451 A (NOF Corp.),<br>10 August 1999 (10.08.1999),<br>entire text<br>(Family: none) | 1-18 |
| A | JP 2010-24283 A (Arakawa Chemical Industries,<br>Ltd.),<br>04 February 2010 (04.02.2010),<br>entire text<br>(Family: none) | 1-18 |
| A | JP 2007-138027 A (Dainippon Ink and Chemicals,<br>Inc.),<br>07 June 2007 (07.06.2007),<br>paragraph [0056]<br>(Family: none) | 1-18 |

Form PCT/ISA/210 (continuation of second sheet) (July 2009)

**EP 2 540 495 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007058162 A
- JP 2008096781 A
- JP 2004114355 A
- JP 2005186584 A
- JP 2009040056 A
- JP 2004230562 A